# EUROPÄISCHE PATENTSCHRIFT

(11) **EP 4 382 380 B1**
(45) Veröffentlichungstag und Bekanntmachung des Hinweises auf die Patenterteilung: **14.01.2026**
(21) Anmeldenummer: 23212501.3
(22) Anmeldetag: 28.11.2023
(51) Int. Cl.: B60W 10/06, B60W 10/08, B60W 20/16

(54) **VERFAHREN ZUM BETREIBEN EINES HYBRIDFAHRZEUGS**
METHOD FOR OPERATING A HYBRID VEHICLE
PROCÉDÉ DE FONCTIONNEMENT D'UN VÉHICULE HYBRIDE

(30) Priorität: 07.12.2022 DE 102022213216
(43) Veröffentlichungstag der Anmeldung: 12.06.2024
(73) Patentinhaber: VOLKSWAGEN AG, 38440 Wolfsburg (DE)
(72) Erfinder: Fugel, Markus, 38104 Braunschweig (DE); Bunkus, Johannes, 39393 Hötensleben OT Barneberg (DE)

(56) Entgegenhaltungen:
- DE-A1- 102017 219 172
- US-A1- 2004 006 414
- US-A1- 2019 118 793
- US-A1- 2022 227 349

## Beschreibung

Die Erfindung betrifft ein Verfahren zum Betreiben eines Hybridkraftfahrzeugs.

Hybridkraftfahrzeuge weisen einen elektrischen Fahrantrieb sowie einen als Fahrantrieb nutzbaren Verbrennungsmotor auf. Dabei kann ein Hybridfahrzeug der in Rede stehenden Art typischerweise in einer Reihe unterschiedlicher Betriebsarten betrieben werden. Um einen möglichst wirtschaftlichen und umweltschonenden Betrieb zu gewährleisten, können beispielsweise Kurzstrecken rein elektrisch zurückgelegt werden. Dies hat jedoch den Nachteil, dass zum einen lediglich die Antriebsleistung des elektrischen Antriebs zur Verfügung steht, zum anderen wird bei einem rein elektrischen Betrieb der Akkumulator, der elektrische Energie zum Betreiben des elektrischen Fahrantriebs speichert, vergleichsweise schnell geleert.

Insbesondere dann, wenn beispielsweise aufgrund des Vorhandenseins einer Anhängelast erhöhte Anforderungen an die Leistungsfähigkeit des Fahrantriebs des Hybridkraftfahrzeugs gestellt werden, ist es daher sinnvoll, wenn der Verbrennungsmotor zusätzlich zum elektrischen Antrieb betrieben wird. In der Vergangenheit sind daher bereits Verfahren zum Betreiben eines Hybridkraftfahrzeugs entwickelt worden, bei dem das Hybridkraftfahrzeug Mittel zum Ziehen einer Anhängelast und Mittel zur Erkennung einer Anhängelast aufweist und wobei beim Erkennen einer Anhängelast eine Anhängerbetriebsart gewählt wird. Ein solches Verfahren ist beispielsweise in der DE 10 2014 220 442 A1 offenbart. Die Anhängerbetriebsart sieht dort vor, dass bereits beim Lösen eines Bremspedals der Verbrennungsmotor hochgefahren wird, sodass dessen Antriebsleistung bereits zur Verfügung steht, bevor diese durch das Betätigen des Fahrpedals vom Fahrer angefordert wird. Dadurch werden durch den Anhänger bedingte Verzögerungen beim Beschleunigen, die sich insbesondere dadurch ergeben, dass der Verbrennungsmotor in der rein elektrischen Betriebsweise erst noch starten muss, vermieden.

Die DE 10 2009 026 821 A1 offenbart ebenfalls ein Verfahren zum Betreiben eines Hybridkraftfahrzeugs, bei dem beim Erkennen einer Anhängelast der Start/Stopp-Betrieb des Verbrennungsmotors unterbunden wird.

Diese aus der Vergangenheit bekannten Verfahren eignen sich jedoch nicht zum Betrieb von Hybridkraftfahrzeugen, die die aktuell zu erwartenden künftigen Anforderungen an die Höchstemissionen der Verbrennungsmotoren an Schadstoffen einhalten sollen. Dies liegt daran, dass die nach dem Stand der Technik bekannten vorstehend genannten Verfahren einzig darauf abzielen, möglichst unmittelbar nach Betriebsbeginn des Kraftfahrzeugs die volle Leistung des Verbrennungsmotors zur Verfügung zu stellen.

Die US 2022/227349 A1 offenbart ein Kraftfahrzeug mit einer Anhängerbetriebsart, in der eine möglichst hohe Antriebsleistung zur Verfügung gestellt wird.

Die US 2019/118793 A1 offenbart ein Mildhybridfahrzeug, bei der ein elektrischer Antrieb in einer Betriebsphase nach einem Kaltstart den Verbrennungsmotor unterstützt, um den Schadstoffausstoß in dieser Betriebsphase zu reduzieren.

Die DE 10 2022 101 027 A1 wird ein Hybridfahrzeug offenbart, das in einem Abschleppmodus betrieben werden kann. Der Abschleppmodus zeichnet sich durch ein vorzeitiges hochfahren des Verbrennungsmotors aus. Dadurch soll eine ausreichende Antriebsleistung gewährleistet und die Fahrbarkeit verbessert werden.

Die DE 10 2000 19201 157 A1 offenbart ein Verfahren zur Abgasnachbehandlung in einer Hybridmaschine. Das Verfahren zum Betreiben der Hybridmaschine sieht vor, dass in einem rein elektrischen Betriebsmodus ein Verbrennungsmotor vorübergehend zum Erwärmen des Abgasnachbehandlungssystems zugeschaltet werden kann.

Als problematisch kann sich hierbei vor dem Hintergrund immer strenger werdender Anforderungen an die Schadstoffemissionen derartiger Hybridkraftfahrzeug erweisen, dass die Beteiligung der Verbrennungsmotoren mit ihrer vollen Leistung an der Erzeugung der Antriebsleistung zu Zeitpunkten erfolgen kann, an denen die typischerweise an Hybridkraftfahrzeugen vorhandener Abgasnachbehandlungseinrichtung nicht ihre volle Leistungsfähigkeit entfalten kann. Die Folge sind erhöhte Schadstoffemissionen.

Der Erfindung liegt daher die Aufgabe zugrunde, ein Verfahren zum Betreiben eines Hybridkraftfahrzeugs aufzuzeigen, dass zum einen den Schadstoffausstoß des Verbrennungsmotors minimiert und zum anderen eine befriedigende Gesamtantriebsleistung möglichst verzögerungsarm bereitstellt.

Die Aufgabe wird gelöst durch ein Verfahren zum Betreiben eines Hybridkraftfahrzeugs mit den Merkmalen des Anspruchs 1. Die Merkmale der abhängigen Ansprüche betreffen vorteilhafte Ausführungsformen.

Das Verfahren zum Betreiben eines Hybridkraftfahrzeugs sieht vor, dass das Hybridkraftfahrzeugs einen elektrischen Fahrantrieb sowie einen als Fahrantrieb nutzbaren Verbrennungsmotor aufweist.

Das Verfahren sieht weiter vor, dass das Hybridkraftfahrzeug eine Mehrzahl unterschiedlicher Betriebsarten Steuerung der Verteilung der Antriebsleistung auf elektrischen Fahrantrieb und Verbrennungsmotor aufweist. Dabei handelt es sich bei einer der Betriebsarten um eine Anhängerbetriebsart zum Bewegen einer Anhängelast durch das Hybridkraftfahrzeug.

Die Aufgabe wird insbesondere dadurch gelöst, dass in der Anhängerbetriebsart ein Erwärmen einer Abgasnachbehandlungseinrichtung mittels eines Aufwärmbetriebs des Verbrennungsmotors erfolgt. Es hat sich im Zusammenhang mit der vorliegenden Erfindung gezeigt, dass sich die im Zusammenhang mit dem Anhängerbetrieb auftretenden Schadstoffemissionen wirkungsvoll eingrenzen lassen, indem eine Abgasnachbehandlungseinrichtung mittels eines Aufwärmbetriebs des Verbrennungsmotors gezielt erwärmt wird. Unter einem kurzen Aufwärmbetrieb des Verbrennungsmotors ist in diesem Zusammenhang insbesondere ein Betrieb des Verbrennungsmotors zu verstehen, der primär zu dem Zweck erfolgt, die Abgasnachbehandlungseinrichtung zu erwärmen. Mit anderen Worten handelt es sich insbesondere um einen Betrieb des Verbrennungsmotors, der ohne das Ziel, die Abgasnachbehandlungseinrichtung zu erwärmen, nicht erfolgen würde.

Es hat sich gezeigt, dass sich durch einen derartigen Aufwärmbetrieb eine zumindest ausreichende Leistungsfähigkeit der Abgasnachbehandlungseinrichtung nach einem vergleichsweise kurzen Zeitraum erreichen lässt. Es hat sich im Zusammenhang der vorliegenden Erfindung gezeigt, dass sich in der Praxis auf diese Weise ein Anhängerbetrieb realisieren lässt, bei dem Schadstoffemissionen wirkungsvoll reduziert werden und dem Fahrer dennoch eine hinreichende Leistung des Antriebssystems, zumindest in einem Großteil der praxisrelevanten Szenarien, bereitgestellt werden kann.

Das Verfahren sieht insbesondere vor, dass das Erwärmen der Abgasnachbehandlungseinrichtung mittels des Aufwärmbetriebs wenigstens bis zum Erreichen eines Mindestbetriebstemperaturwerts durch die Betriebstemperatur der Abgasnachbehandlungseinrichtung erfolgt, bei dem das Antreiben des Hybridkraftfahrzeugs mittels des Verbrennungsmotors verhindert oder lediglich bei reduzierter Leistung des Verbrennungsmotors zugelassen wird. Hierdurch wird verhindert, dass es zu unzulässig hohen Schadstoffemissionen kommt, wenn durch eine entsprechende Leistungsanforderung des Fahrers entsprechende Mengen an Schadstoffen in dem Verbrennungsmotor produziert werden, durch die Abgasnachbehandlungseinrichtung jedoch nicht ausreichend neutralisiert werden können, da diese die hierfür notwendige Betriebstemperatur noch nicht erreicht hat.

Mit anderen Worten wird gerade nicht, wie im Stand der Technik bereits bekannt und mit entsprechenden Schadstoffemissionen verbunden, die volle Leistungsfähigkeit des Hybridantriebs von Fahrtbeginn an zur Verfügung gestellt. Es wird vielmehr lediglich ein Betrieb des Verbrennungsmotors, bei dem das Antreiben des Hybridkraftfahrzeugs mittels des Verbrennungsmotors verhindert oder lediglich bei reduzierter Leistung des Verbrennungsmotors zugelassen wird, insbesondere nämlich der Aufwärmbetrieb zum Erwärmen der Abgasnachbehandlungseinrichtung, zugelassen, solange der Mindesttemperaturwert durch die Betriebstemperatur der Abgasnachbehandlungseinrichtung nicht erreicht ist. Dies führt zwar nicht dazu, dass dem Fahrer die volle Leistungsfähigkeit des Hybridantriebs unmittelbar von Fahrtbeginn an zur Verfügung steht, diese kann dem Fahrer jedoch bereits nach einem überschaubaren Zeitraum zur Verfügung gestellt werden. In der Praxis hat sich gezeigt, dass bereits nach einem Aufwärmbetrieb von beispielsweise ca. 20 Sekunden die Betriebstemperatur der Abgasnachbehandlungseinrichtung den Mindestbetriebstemperaturwert erreichen kann. Ab diesem Zeitpunkt kann dem Fahrer die volle Leistungsfähigkeit des Verbrennungsmotors zur Verfügung gestellt werden, ohne dass es zu den zu vermeidenden überhöhten Schadstoffemissionen kommt. Es hat sich gezeigt, dass dies in der Praxis eine gangbare Kompromisslösung ist, da insbesondere in den ersten Sekunden nach Fahrtantritt häufig noch gar keine hohen Leistungsanforderungen bestehen. Diese treten typischerweise erst in Fahrsituation mit Beschleunigungen auf eine hohe Geschwindigkeit auf bzw. wenn Anstiege zügig zurückgelegt werden. In den ersten Sekunden des Betriebs des Hybridkraftfahrzeugs findet jedoch typischerweise ein Betrieb mit niedrigen Geschwindigkeiten, oftmals beginnend mit einem Rangierbetrieb ("ausparken") statt. Erst nach dem Erreichen von Hauptverkehrsadern, beispielsweise Autobahnen, werden üblicherweise höhere Geschwindigkeiten gefahren und entsprechende Leistungen durch den Fahrer angefordert. Dadurch stellt das Unterdrücken des Beitrags des Verbrennungsmotors zur Antriebsleistung in den ersten Minuten des Kraftfahrzeugbetriebs eine Maßnahme dar, die den Betrieb in der Praxis kaum beeinträchtigt. Das Entstehen schädlicher Emissionen wird jedoch vergleichsweise wirkungsvoll verhindert.

Das Verfahren sieht vor, dass bei dem Erwärmen der Abgasnachbehandlungseinrichtung mittels des Aufwärmbetriebs des Verbrennungsmotors das Antreiben des Hybridkraftfahrzeugs mittels des Verbrennungsmotors verhindert wird. Mit anderen Worten wird der Verbrennungsmotor, beispielsweise mittels einer Kupplung, vom Antriebsstrang getrennt und läuft dadurch insbesondere bei entsprechend geringer Last (und damit entsprechend geringem Schadstoffausstoß) "warm". Durch die dabei zwangsläufig erzeugten Abgase wird die Abgasnachbehandlungseinrichtung dennoch erwärmt. Dabei kann der Aufwärmbetrieb vorsehen, dass der Verbrennungsmotor zum Antreiben von Hilfsaggregaten, die keine Fahrbewegung bewirken, genutzt wird. Bei diesen kann es sich beispielsweise um eine Kühlmittelpumpe, einen Generator zur Erzeugung elektrischer Energie und/oder einen Kompressor einer Klimaanlage handeln. Alternativ kann ein "reiner" Aufwärmbetrieb vorgesehen sein, bei dem lediglich so viel mechanische Leistung durch den Verbrennungsmotor erzeugt wird, wie notwendig ist, um den Aufwärmbetrieb des Verbrennungsmotors aufrechtzuerhalten.

Alternativ und/oder ergänzend sieht das Verfahren vor, dass bei dem Erwärmen der Abgasnachbehandlungseinrichtung mittels des Aufwärmbetriebs des Verbrennungsmotors das Antreiben des Hybridkraftfahrzeugs mittels des Verbrennungsmotors lediglich bei reduzierter Leistung des Verbrennungsmotors zugelassen wird. Unter einer reduzierten Leistung des Verbrennungsmotors ist insbesondere eine Leistung des Verbrennungsmotors zu verstehen, die auf einen Wert begrenzt ist, bei dem gewünschte Schadstoffgrenzwerte mit zumindest hinreichender Sicherheit eingehalten werden können, auch wenn die Betriebstemperatur der Abgasnachbehandlungseinrichtung den Mindestbetriebstemperaturwert noch nicht erreicht hat. Ein derartiger Aufwärmbetrieb bietet den Vorteil, dass zumindest ein Teil der potentiell zur Verfügung stehenden Leistung des Verbrennungsmotors bereits während des Aufwärmbetriebs genutzt werden kann. Dies kann insbesondere in Fahrsituationen, in denen eine erhöhte Leistungsanforderung bereits in den ersten Sekunden einer Fahrt auftritt, positive Auswirkungen auf das Fahrverhalten des Hybridkraftfahrzeugs haben. Auch wenn Situationen mit hohen Leistungsanforderungen tendenziell seltener unmittelbar zu Beginn als in späteren Phasen einer Fahrt zu erwarten sind, können diese grundsätzlich natürlich dennoch bereits unmittelbar bzw. sehr kurze Zeit nach Fahrtbeginn auftreten, beispielsweise wenn unmittelbar nach Fahrtantritt eine Steigung zu bewältigen ist oder auf eine Autobahn aufgefahren wird, beispielsweise nach einer längeren Fahrtunterbrechung auf einem Rastplatz. Dann hat ein Aufwärmbetrieb des Verbrennungsmotors, bei dem, insbesondere nach dem Grundsatz "so viel Leistung wie möglich, aber so wenig Schadstoffausstoß wie nötig", eine gewisse Leistung des Verbrennungsmotors für den Fahrantrieb zur Verfügung steht, Vorteile.

Der Mindestbetriebstemperaturwert ist insbesondere wenigstens so hoch wie die Light-off-Temperatur der Abgasnachbehandlungseinrichtung gewählt. Bei der Light-off-Temperatur der Abgasnachbehandlungseinrichtung handelt es sich insbesondere um diejenige Temperatur, bei deren Erreichen durch die Betriebstemperatur der Abgasnachbehandlungseinrichtung nahezu die volle Wirkung der Abgasnachbehandlungseinrichtung einsetzt. Die Abgasnachbehandlungseinrichtung kann ein temperaturabhängiges Verhalten aufweisen, bei dem die chemische Umsetzung eines Edukts in ein Produkt durch die Abgasnachbehandlungseinrichtung eine exponentielle Temperaturabhängigkeit zeigt. Insbesondere in derartigen Fällen kann die Light-off-Temperatur als diejenige Temperatur definiert sein, in der ein Umsatz der Edukte von 50 % erzielt wird. In der Abgasnachbehandlungseinrichtung können eine Mehrzahl chemischer Reaktionen parallel ablaufen. Dementsprechend können die unterschiedlichen chemischen Reaktionen unterschiedliche Light-off-Temperaturen aufweisen. In derartigen Fällen ist unter der Light-off-Temperatur der Abgasnachbehandlungseinrichtung insbesondere die höchste der Light-off-Temperaturen der zum Zwecke der Abgasnachbehandlung in der Abgasnachbehandlungseinrichtung ablaufenden chemischen Reaktionen zu verstehen.

Bei der Abgasnachbehandlungseinrichtung kann es sich um einen Oxidationskatalysator, insbesondere einen Dreiwege- oder einen Vierwege-Katalysator, einen Partikelfilter, einen SCR-Katalysator und/oder einen Speicherkatalysator handeln.

Das Verfahren kann insbesondere vorsehen, dass der Mindestbetriebstemperaturwert wenigstens 20 Grad Celsius, insbesondere 50 Grad Celsius, oberhalb der Light-off-Temperatur der Abgasnachbehandlungseinrichtung gewählt ist. Dadurch kann sichergestellt werden, dass eine hinreichende Qualität der Abgasnachbehandlung mit einer entsprechend hohen Sicherheit gewährleistet wird.

Das Verfahren kann vorsehen, dass das Erwärmen der Abgasnachbehandlungseinrichtung mittels des Aufwärmbetriebs des Verbrennungsmotors beim Überschreiten eines ersten Betriebstemperaturwerts durch die Betriebstemperatur der Abgasnachbehandlungseinrichtung unterbrochen und/oder beendet wird. Dies kann zur Kraftstoffersparnis und zur Minimierung von Schadstoffemissionen beitragen.

Der erste Betriebstemperaturwert wird hierbei insbesondere derart gewählt, dass sichergestellt ist, dass zumindest unmittelbar nach dem Unterbrechen und/oder Beenden des Erwärmens der Abgasnachbehandlungseinrichtung zunächst noch eine hinreichende Leistungsfähigkeit der Abgasnachbehandlungseinrichtung zur Verfügung steht. Entsprechend ist der erste Betriebstemperaturwert wenigstens so hoch gewählt wie der Mindestbetriebstemperaturwert. Vorzugsweise jedoch wird der erste Betriebstemperaturwert derart hoch gewählt, dass auch bei einem Unterbrechen und/oder Beenden des Erwärmens der Abgasnachbehandlungseinrichtung deren Leistungsfähigkeit noch wenigstens einen gewissen Zeitraum in zumindest hinreichendem Maße zur Verfügung steht, auch wenn die Abgasnachbehandlungseinrichtung in diesem Zeitraum wieder abgekühlt. Entsprechend ist der erste Betriebstemperaturwert vorzugsweise wenigstens 50 Grad Celsius höher gewählt als der Mindestbetriebstemperaturwert, insbesondere ist der ersten Betriebstemperaturwert vorzugsweise wenigstens 80 Grad Celsius höher gewählt als der Mindesttemperaturwert.

Das Verfahren kann vorsehen, dass das Erwärmen der Abgasnachbehandlungseinrichtung mittels des Aufwärmbetriebs des Verbrennungsmotors nach dem Unterbrechen des Erwärmens mittels des Aufwärmbetriebs des Verbrennungsmotors erneut eingeleitet wird, sobald die Temperatur der Abgasnachbehandlungseinrichtung einen zweiten Betriebstemperaturwert unterschreitet und/oder zu unterschreiten droht. Eine derartige Verfahrensweise hat den Vorteil, dass sichergestellt werden kann, dass, wenn durch das Unterbrechen des Erwärmens die Betriebstemperatur der Abgasnachbehandlungseinrichtung sinkt, das Absinken der Abgasnachbehandlungseinrichtung durch das erneute Einleiten des Erwärmens der Abgasnachbehandlungseinrichtung mittels des Aufwärmbetriebs des Verbrennungsmotors so rechtzeitig gestoppt werden kann, dass eine hinreichende Leistungsfähigkeit der Abgasnachbehandlungseinrichtung weiterhin zur Verfügung steht. Entsprechend kann der zweite Betriebstemperaturwert insbesondere niedriger als der erste Betriebstemperaturwert und/oder wenigstens hoch wie der Mindestbetriebstemperaturwert gewählt sein. Durch eine Wahl des zweiten Betriebstemperaturwerts oberhalb des Mindestbetriebstemperaturwerts kann insbesondere sichergestellt werden, dass der Mindestbetriebstemperaturwert durch die Betriebstemperatur der Abgasnachbehandlungseinrichtung nicht unterschritten wird und der Verbrennungsmotor, insbesondere mit voller Leistung, weiterhin für das Antreiben des Hybridkraftfahrzeugs genutzt werden kann. Dabei sollte sich der Mindestbetriebstemperaturwert wenigstens 20, besser 50 Grad Celsius oberhalb der Light-off Temperatur befinden.

Das Verfahren kann vorsehen, dass bei dem Betrieb des Hybridkraftfahrzeugs in der Anhängerbetriebsart das Erwärmen der Abgasnachbehandlungseinrichtung mittels des Aufwärmbetriebs des Verbrennungsmotors unmittelbar bei Fahrtantritt eingeleitet wird. Unter einer Einleitung unmittelbar bei Fahrtantritt ist insbesondere zu verstehen, dass bei dem Betrieb des Hybridkraftfahrzeugs in der Anhängerbetriebsart das Erwärmen der Abgasnachbehandlungseinrichtung mittels des Aufwärmbetriebs des Verbrennungsmotors bei Fahrtantritt eingeleitet wird, ohne dass es hierzu einer gesonderten Interaktion des Fahrers mit dem Hybridkraftfahrzeug bedarf, die über die bei Fahrtantritt auch ansonsten notwendigen Interaktionen hinausgeht.

Das Verfahren kann insbesondere vorsehen, dass beim Fahrtantritt eine Überprüfung auf das Vorhandensein einer Anhängelast erfolgt und bei erkannter Anhängelast die Anhängerbetriebsart gewählt wird. Das Hybridkraftfahrzeug kann hierfür insbesondere eine geeignete Erkennungseinrichtung zum Erkennen einer Anhängelast aufweisen. So können beispielsweise Sensoren vorhanden sein, die das Vorhandensein eines an eine Anhängerkupplung des Hybridkraftfahrzeugs angehängten Anhängers erkennen können. Mit anderen Worten erfolgt die Wahl der Anhängerbetriebsart automatisch, sobald eine Anhängelast erkannt wird. Dies hat den Vorteil, dass zum einen ein Höchstmaß an Bedienkomfort ermöglicht wird, zum anderen wird vermieden, dass ein manuelles Anwählen der Anhängerbetriebsart möglicherweise vergessen wird und insbesondere das Vergessen des Anwählens der Anhängerbetriebsart erst dann gemerkt wird, wenn die zusätzliche Leistung tatsächlich benötigt wird. Alternativ und/oder ergänzend kann das Verfahren auch vorsehen, dass die Anhängerbetriebsart manuell anwählbar ist. Dies kann beispielsweise dann vorteilhaft sein, wenn die erhöhte Leistungsfähigkeit der Anhängerbetriebsart auch dann gewünscht bzw. benötigt wird, wenn die Anhängelast nicht erkannt wird, beispielsweise aufgrund eines Defekts eines entsprechenden Sensors, oder wenn eine geeignete Erkennungseinrichtung zum Erkennen einer Anhängelast, beispielsweise aus Kostengründen, nicht vorhanden ist.

Weitere praktische Ausführungsformen der Erfindung sind nachfolgend im Zusammenhang mit den Zeichnungen beschrieben. Es zeigen:
- Fig. 1: ein schematisches Diagramm der Leistung über die Zeit einer hypothetischen Fahrt mit einem Hybridkraftfahrzeug nach dem Stand der Technik,
- Fig. 2: ein entsprechendes Diagramm bei Verwendung eines erfindungsgemäßen Verfahrens zum Betrieb des Hybridfahrzeugs.

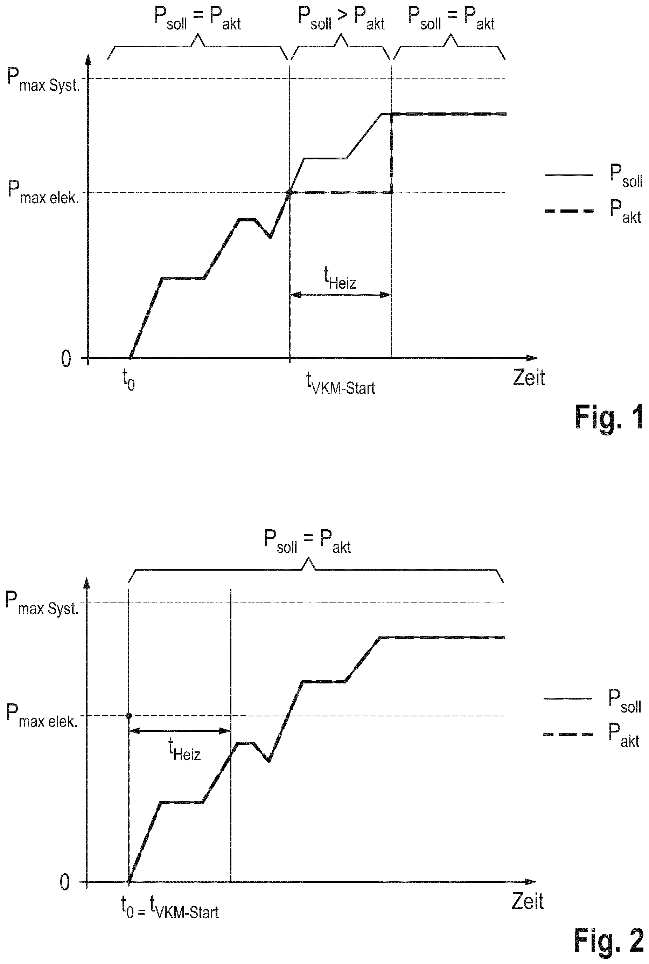

In Figur 1 ist dargestellt, wie sich für eine hypothetische Fahrt die vom Fahrer, beispielsweise mittels der Betätigung des Gaspedals, angeforderte Antriebsleistung P ₛₒₗₗ und die vom Antriebssystem des Hybridkraftfahrzeugs tatsächlich erzeugte an aktuelle Antriebsleistung P ₐₖₜ während einer virtuellen Fahrt über der Zeit verhält. Im Falle des in Figur 1 abgebildeten Beispiels verfügt das Hybridkraftfahrzeug nicht über eine Anhängerbetriebsart. Um jedoch Anforderungen an die Schadstoffemissionen zu erfüllen, wird ein Beitrag des Verbrennungsmotors zur Antriebsleistung durch ein Abkuppeln des Verbrennungsmotors verhindert, solange die Abgasnachbehandlungseinrichtung noch keine hinreichende Betriebstemperatur erreicht hat. In Folge kommt es zu den in Figur 1 dargestellten Verläufen der Antriebsleistung. Zu einem Zeitpunkt T₀ beginnt die Fahrt, dabei werden zunächst verhältnismäßig niedrige Antriebsleistungen P ₛₒₗₗ angefordert. Diese können durch den rein elektrischen Betrieb bereitgestellt werden. Die aktuelle Antriebsleistung P ₐₖₜ entspricht daher zunächst der angeforderten Antriebsleistung P ₛₒₗₗ.

Überschreitet jedoch die angeforderte Antriebsleistung P ₛₒₗₗ die maximale elektrische Antriebsleistung P _{max elek}, so kann die angeforderte Antriebsleistung P ₛₒₗₗ nur durch einen kombinierten Betrieb aus Verbrennungsmotor und elektrischem Antrieb zur Verfügung gestellt werden. Wenn es nun zu einem Szenario wie dem dargestellten kommt, bei dem ausgehend von einem rein elektrischen Betrieb eine durch diesen nicht mehr darstellbare angeforderte Antriebsleistung P ₛₒₗₗ benötigt wird, muss der Verbrennungsmotor gestartet werden. Im gezeigten Beispiele zur folgt dies zu dem Zeitpunkt t _{VKM-Start}. Die maximale Systemantriebsleistung P _{max Syst} steht jedoch zunächst noch nicht zur Verfügung, da für die Dauer einer Aufheizzeit t _{Heiz} die Leistungsabgabe des Verbrennungsmotors an das Antriebssystem verhindert wird. Erst nach dem Verstreichen der Aufheizzeit t _{Heiz} steht die maximale Systemantriebsleistung P _{max Syst} zur Verfügung und die aktuelle Antriebsleistung P ₐₖₜ entspricht wieder der angeforderten Antriebsleistung P ₛₒₗₗ. Während der Aufheizzeit t _{Heiz} kann die angeforderte auf Antriebsleistung P ₛₒₗₗ durch die aktuelle Antriebsleistung P ₐₖₜ jedoch nicht erreicht werden, was der Fahrer als spürbaren Leistungsverlust wahrnimmt. Im gezeigten Beispiel ist die Diskrepanz zwischen angeforderter Antriebsleistung P ₛₒₗₗ und aktueller Antriebsleistung P ₐₖₜ für den Fall dargestellt, dass während der Aufheizzeit t _{Heiz} überhaupt kein Beitrag des Verbrennungsmotors zur Antriebsleistung erfolgt. Möglich wären jedoch auch Fälle, bei denen der Beitrag des Verbrennungsmotors zur Antriebsleistung lediglich begrenzt wird, bis die entsprechende Betriebstemperatur der Abgasnachbehandlungseinrichtung erreicht ist. Die Diskrepanz zwischen der aktuellen Antriebsleistung P ₐₖₜ und der angeforderten Antriebsleistung P ₛₒₗₗ würde dann entsprechend geringer ausfallen.

Bei dem in Figur 2 gezeigten Beispiel wird das Hybridkraftfahrzeug nach einem Verfahren zum Betreiben eines Hybridkraftfahrzeugs betrieben, bei dem eine Anhängerbetriebsart ein Erwärmen einer Abgasnachbehandlungseinrichtung mittels eines Aufwärmbetriebs des Verbrennungsmotors vorsieht. Wie im gezeigten Beispiel kann das Verfahren insbesondere vorsehen, dass beim Betrieb des Hybridkraftfahrzeugs in der Anhängerbetriebsart das Erwärmen der Abgasnachbehandlungseinrichtung mittels des Aufwärmbetriebs des Verbrennungsmotors unmittelbar bei Fahrtantritt eingeleitet wird. Dies hat zur Folge, dass die Startzeitpunkte T₀ und T _{VKM-Start} von Fahrt und Verbrennungsmotor zusammenfallen. Auf diese Weise wird in der Anhängerbetriebsart ein Aufwärmbetrieb des Verbrennungsmotors gestartet, obwohl die angeforderte Antriebsleistung P ₛₒₗₗ zunächst noch weit unter der maximalen elektrischen Antriebsleistung P _{max elek} liegt. Nach Verstreichen der Aufheizzeit t _{Heiz} steht so die maximale Systemantriebsleistung P _{max Syst} zur Verfügung. In Folge dessen kann im Fall der beispielhaften Fahrt zu jedem Zeitpunkt die vom Fahrer angeforderte Antriebsleistung P ₛₒₗₗ durch die aktuelle Antriebsleistung P ₐₖₜ bedient werden.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche und unter Berücksichtigung der Kenntnisse des zuständigen Fachmanns variiert werden.

### Bezugszeichenliste

- P ₛₒₗₗ: angeforderte Antriebsleistung
- P ₐₖₜ: aktuelle Antriebsleistung
- P _{max elek}: maximalen elektrischen Antriebsleistung
- P _{max Syst}: maximale Systemantriebsleistung
- t _{Heiz}: Aufheizzeit
- t _{VKM-Start}: Start des Verbrennungsmotors
- t₀: Beginn der Fahrt

## Patentansprüche

1. Verfahren zum Betreiben eines Hybridkraftfahrzeugs, wobei das Hybridkraftfahrzeug einen elektrischen Fahrantrieb sowie einen als Fahrantrieb nutzbaren Verbrennungsmotor aufweist, wobei das Hybridkraftfahrzeug eine Mehrzahl unterschiedlicher Betriebsarten für die Steuerung der Verteilung der Antriebsleistung auf elektrischen Fahrantrieb und Verbrennungsmotor aufweist, wobei es sich bei einer der Betriebsarten um eine Anhängerbetriebsart zum Bewegen einer Anhängelast durch das Hybridkraftfahrzeug handelt, **dadurch gekennzeichnet,**
**dass** in der Anhängerbetriebsart ein Erwärmen einer Abgasnachbehandlungseinrichtung mittels eines Aufwärmbetriebs des Verbrennungsmotors erfolgt, wobei bei dem Erwärmen der Abgasnachbehandlungseinrichtung mittels des Aufwärmbetriebs das Antreiben des Hybridkraftfahrzeugs mittels des Verbrennungsmotors verhindert oder lediglich bei reduzierter Leistung des Verbrennungsmotors zugelassen wird.

2. Verfahren nach Anspruch 1, **dadurch gekennzeichnet, dass** das Erwärmen der Abgasnachbehandlungseinrichtung mittels des Aufwärmbetriebs wenigstens bis zum Erreichen eines Mindestbetriebstemperaturwerts durch die Betriebstemperatur der Abgasnachbehandlungseinrichtung erfolgt, bei dem das Antreiben des Kraftfahrzeugs mittels des Verbrennungsmotors verhindert oder lediglich bei reduzierter Leistung des Verbrennungsmotors zugelassen wird.

3. Verfahren nach einem der vorigen Ansprüche, **dadurch gekennzeichnet, dass** der Mindestbetriebstemperaturwert wenigstens so hoch wie die Light-off-Temperatur der Abgasnachbehandlungseinrichtung, insbesondere wenigstens 20 °C oberhalb der Light-off-Temperatur der Abgasnachbehandlungseinrichtung, gewählt ist.

4. Verfahren nach einem der vorigen Ansprüche, **dadurch gekennzeichnet, dass** es sich bei der Abgasnachbehandlungseinrichtung um einen Oxidationskatalysator, insbesondere einen 3- oder 4-Wege-Katalysator, einen Partikelfilter, einen SCR-Katalysator und/oder einen Speicherkatalysator handelt.

5. Verfahren nach einem der vorigen Ansprüche, **dadurch gekennzeichnet, dass** das Erwärmen der Abgasnachbehandlungseinrichtung mittels des Aufwärmbetriebs des Verbrennungsmotors beim Überschreiten eines ersten Betriebstemperaturwerts durch die Betriebstemperatur der Abgasnachbehandlungseinrichtung unterbrochen und/oder beendet wird.

6. Verfahren nach einem der vorigen Ansprüche, **dadurch gekennzeichnet dass** das Erwärmen der Abgasnachbehandlungseinrichtung mittels des Aufwärmbetriebs des Verbrennungsmotors bei erkannter Anhängelast nach dem Unterbrechen des Erwärmens mittels des Aufwärmbetriebs des Verbrennungsmotors erneut eingeleitet wird, sobald die Betriebstemperatur der Abgasnachbehandlungseinrichtung einen zweiten Betriebstemperaturwert unterschreitet und/oder zu unterschreiten droht.

7. Verfahren nach einem der vorigen Ansprüche, **dadurch gekennzeichnet, dass** bei dem Betrieb des Hybridkraftfahrzeugs in der Anhängerbetriebsart das Erwärmen der Abgasnachbehandlungseinrichtung mittels des Aufwärmbetriebs des Verbrennungsmotors unmittelbar bei Fahrtantritt eingeleitet wird.

8. Verfahren nach einem der vorigen Ansprüche, **dadurch gekennzeichnet, dass** beim Fahrtantritt eine Überprüfung auf das Vorhandensein einer Anhängelast erfolgt und bei erkannter Anhängelast die Anhängerbetriebsart gewählt wird.

## Claims

1. Method for operating a hybrid motor vehicle, the hybrid motor vehicle comprising an electric travel drive and an internal combustion engine usable as a travel drive, the hybrid motor vehicle comprising a plurality of different operating modes for controlling the distribution of the drive power to the electric travel drive and the internal combustion engine, one of the operating modes being a trailer operating mode for moving a trailer load by the hybrid motor vehicle,
**characterized in that,**
in the trailer operating mode, an exhaust gas aftertreatment device is heated by means of a warm-up operation of the internal combustion engine, the driving of the hybrid motor vehicle by means of the internal combustion engine being prevented, or being permitted only at reduced power of the internal combustion engine, when the exhaust gas aftertreatment device is heated by means of the warm-up operation.

2. Method according to claim 1, **characterized in that** the exhaust gas aftertreatment device is heated by means of the warm-up operation at least until a minimum operating temperature value is reached by the operating temperature of the exhaust gas aftertreatment device, at which the driving of the motor vehicle by means of the internal combustion engine is prevented or permitted only at reduced power of the internal combustion engine.

3. Method according to any of the preceding claims, **characterized in that** the minimum operating temperature value is selected to be at least as high as the light-off temperature of the exhaust gas aftertreatment device, in particular at least 20°C above the light-off temperature of the exhaust gas aftertreatment device.

4. Method according to any of the preceding claims, **characterized in that** the exhaust gas aftertreatment device is an oxidation catalyst, in particular a 3- or 4-way catalyst, a particulate filter, an SCR catalyst and/or a storage catalyst.

5. Method according to any of the preceding claims, **characterized in that** the heating of the exhaust gas aftertreatment device by means of the warm-up operation of the internal combustion engine is interrupted and/or terminated when the operating temperature of the exhaust gas aftertreatment device exceeds a first operating temperature value.

6. Method according to any of the preceding claims, **characterized in that** the heating of the exhaust gas aftertreatment device by means of the warm-up operation of the combustion engine is initiated again when a trailer load is detected, after the heating has been interrupted by means of the warm-up operation of the combustion engine, as soon as the operating temperature of the exhaust gas aftertreatment device falls below and/or threatens to fall below a second operating temperature value.

7. Method according to any of the preceding claims, **characterized in that,** when the hybrid motor vehicle is operated in trailer mode, the heating of the exhaust aftertreatment device is initiated by means of the warm-up operation of the combustion engine immediately upon starting the journey.

8. Method according to any of the preceding claims, **characterized in that,** when starting the journey, a check is carried out as to whether there is a trailer load and, if a trailer load is detected, the trailer operating mode is selected.

## Revendications

1. Procédé permettant de faire fonctionner un véhicule automobile hybride, dans lequel le véhicule automobile hybride présente un entraînement électrique ainsi qu'un moteur à combustion interne pouvant être utilisé comme entraînement, dans lequel le véhicule automobile hybride présente une pluralité de modes de fonctionnement différents pour la commande de la répartition de la puissance d'entraînement sur l'entraînement électrique et le moteur à combustion interne, dans lequel l'un des modes de fonctionnement est un mode de fonctionnement de remorquage pour le déplacement d'une charge remorquée par le véhicule automobile hybride,
**caractérisé en ce**
**que**, dans le mode de fonctionnement de remorquage, un échauffement d'un dispositif de post-traitement des gaz d'échappement est effectué au moyen d'un fonctionnement de chauffage du moteur à combustion interne, dans lequel, lors de l'échauffement du dispositif de post-traitement des gaz d'échappement au moyen du fonctionnement de chauffage, l'entraînement du véhicule automobile hybride au moyen du moteur à combustion interne est empêché ou autorisé uniquement avec une puissance réduite du moteur à combustion interne.

2. Procédé selon la revendication 1, **caractérisé en ce que** l'échauffement du dispositif de post-traitement des gaz d'échappement au moyen du fonctionnement de chauffage est effectué au moins jusqu'à ce que la température de fonctionnement du dispositif de post-traitement des gaz d'échappement atteigne une valeur de température de fonctionnement minimale, à laquelle l'entraînement du véhicule automobile au moyen du moteur à combustion interne est empêché ou autorisé uniquement avec une puissance réduite du moteur à combustion interne.

3. Procédé selon l'une des revendications précédentes,
**caractérisé en ce que** la valeur de température de fonctionnement minimale est choisie de manière à être au moins aussi élevée que la température d'allumage du dispositif de post-traitement des gaz d'échappement, en particulier de manière à être au moins 20 °C au-dessus de la température d'allumage du dispositif de post-traitement des gaz d'échappement.

4. Procédé selon l'une des revendications précédentes,
**caractérisé en ce que** le dispositif de post-traitement des gaz d'échappement est un catalyseur d'oxydation, en particulier un catalyseur à 3 ou 4 voies, un filtre à particules, un catalyseur RCS et/ou un catalyseur accumulateur.

5. Procédé selon l'une des revendications précédentes,
**caractérisé en ce que** l'échauffement du dispositif de post-traitement des gaz d'échappement au moyen du fonctionnement de chauffage du moteur à combustion interne est interrompu et/ou terminé lors du dépassement d'une première valeur de température de fonctionnement par la température de fonctionnement du dispositif de post-traitement des gaz d'échappement.

6. Procédé selon l'une des revendications précédentes,
**caractérisé en ce que** l'échauffement du dispositif de post-traitement des gaz d'échappement au moyen du fonctionnement de chauffage du moteur à combustion interne est à nouveau initié après l'interruption de l'échauffement au moyen du fonctionnement de chauffage du moteur à combustion interne, lorsque la charge remorquée est détectée, dès que la température de fonctionnement du dispositif de post-traitement des gaz d'échappement passe en dessous et/ou risque de passer en dessous d'une seconde valeur de température de fonctionnement.

7. Procédé selon l'une des revendications précédentes,
**caractérisé en ce que**, lorsque le véhicule automobile hybride fonctionne dans le mode de fonctionnement de remorquage, l'échauffement du dispositif de post-traitement des gaz d'échappement est initié au moyen du fonctionnement de chauffage du moteur à combustion interne immédiatement au démarrage.

8. Procédé selon l'une des revendications précédentes,
**caractérisé en ce que**, au démarrage, une vérification de la présence d'une charge remorquée est effectuée et, si une charge remorquée est détectée, le mode de fonctionnement de remorquage est sélectionné.
